# EUROPÄISCHE PATENTSCHRIFT

(11) **EP 1 008 479 B1**
(45) Veröffentlichungstag und Bekanntmachung des Hinweises auf die Patenterteilung: **06.11.2002**
(21) Anmeldenummer: 99124458.3
(22) Anmeldetag: 08.12.1999
(51) Int. Cl.: B29C 49/00, B32B 27/32

(54) **Verfahren zur Erhöhung der Brandfestigkeit von Polyethylen enthaltenden Hohlkörpern**
Process to increase the flame resistance of hollow bodies containing polyethylen
Procédé pour améliorer la résistance au feu de corps creux contenant du polyethylene

(30) Priorität: 08.12.1998 DE 19856445
(43) Veröffentlichungstag der Anmeldung: 14.06.2000
(73) Patentinhaber: Basell Polyolefine GmbH, 50389 Wesseling (DE)
(72) Erfinder: Rohde, Wolfgang Dr., 67346 Speyer (DE); Pfirrmann, Günther Dr., 67069 Ludwigshafen (DE); Bauer, Peter, 67071 Ludwigshafen (DE); Haufe, Andreas Dr., 67069 Ludwigshafen (DE); Koch, Joachim, 67278 Bockenheim (DE)

(56) Entgegenhaltungen:
- EP-A- 0 413 613
- EP-A- 0 933 196
- DE-A- 3 908 418

## Beschreibung

Die vorliegende Erfindung betrifft ein Verfahren zur Erhöhung der Brandfestigkeit von polyethylenhaltigen ein- oder mehrschichtigen Hohlkörpern, insbesondere von Kunststoffkraftstoffbehältern, durch Tempern des Hohlkörpers bei 60 - 135°C.

Polyethylen (PE), insbesondere hochdichtes Polyethylen (HD-PE) eignet sich hervorragend zum Extrusionsblasformen von Hohlkörpern. Eine besondere Anwendung derartiger Hohlkörper ist die Lagerung und der Transport flüssiger Gefahrstoffe. Eine weitere Anwendung ist der Kunststoffkraftstoffbehälter (KKB), der in Automobilen für die raum- und gewichtssparende Bevorratung des flüssigen Otto- oder Dieselkraftstoffs eingesetzt wird. Aus Sicherheitsgründen werden an derartige Hohlkörper hohe Anforderungen insbesondere an Ihre Bruchfestigkeit, Schlagzähigkeit und Brandfestigkeit gestellt. Die Brandfestigkeit derartiger Hohlkörper wird durch einen Brandtest ermittelt, d.h. der Behälter wird unter definierten Versuchsbedingungen beflammt, und es wird die Zeit bis zum Auftreten von Leckagen bestimmt.

Die Brandfestigkeit eines KKB kann bei vorgegebener Gestalt durch Erhöhung der Behälterwanddicke zumindest an dem im Brandfalle besonders gefährdeten Zonen erhöht werden. Die hat aber nachteiligerweise ein unerwünschtes, höheres Gewicht des KKB zur Folge. Es kann sogar einen negativen Einfluss auf das Bruchverhalten haben, da sich Spannungen lokal stärker konzentrieren. Außerdem steigen mit dem erhöhten Materialverbrauch und den durch die höhere Wanddicke längeren Abkühlzeiten beim Blasformen die Herstellkosten an.

Es hat daher nicht an Versuchen gefehlt, die Brandfestigkeit von Hohlkörpern aus Polyethylen ohne Erhöhung der Wandstärke zu verbessern.

EP-A 645 400 offenbart ein spezielles Ethylenpolymerisat zur Herstellung brandfester Kunststoffkraftstoffbehälter. Die Herstellung erfordert aber einen zweistufigen Herstellprozess aus Vorpolymerisation und Hauptpolymerisation sowie sehr spezielle Katalysatoren. Sie ist daher umständlich und teuer.

US 5,020,687 offenbart KKB mit verstärkenden Gewebeeinlagen aus flammenhemmenden, in der Hitze aufschäumenden Materialien. Diese Verstärkungen müssen jedoch vorher in die Blasform eingebracht werden. Auch dieses Verfahren ist umständlich und teuer und kann zu erheblichen Festigkeitsverlusten im Bauteil führen.

Weiterhin ist z.B. aus EP-A 106 099 oder DE-A 196 17 592 bekannt, KKB mit flammenhemmenden Beschichtungen zu versehen. DE 19 50 662 offenbart einen KKB, der zusätzlich mit einer Metallfolie beschichtet ist. Beschichtungen solcher Art sind zumeist sehr teuer, da sie zusätzliche Prozessschritte erfordern. Nachteilig ist, daß die Haftung solcher Beschichtungen auf PE gering ist, so dass sie im Falle eines Unfalles abplatzen können. Gerade dann ist aber die volle Wirksamkeit der Schicht zwingend erforderlich.

Im Automobilbau wird angestrebt, das Fahrzeuggewicht zu verringern. Obwohl mit den geschilderten Methoden, bereits KKB mit verbesserter Brandfestigkeit erhalten werden konnten, besteht weiterhin Bedarf, die Brandfestigkeit weiter zu erhöhen. Aufgabe der vorliegenden Erfindung war es daher, eine einfache Methode zu finden, die Brandfestigkeit eines polyethylenhaltigen Hohlkörpers noch weiter zu verbessern, so dass das Gewicht eines KKB ohne Einbußen bei der Brandfestigkeit reduziert werden kann.

Es ist bekannt, dass die Steifigkeit sowie die Spannungsrissbeständigkeit von Polyethylenflaschen durch Tempern verbessert werden kann (siehe bspw. US 3,293,341, US 3,544,673, R.S. Schotland et al., Poly. Prep., Am. Chem. Soc., Div. Pol. Sci. (1968), 9(2), 1219-1226). Überaschenderweise und auch für den Fachmann völlig unerwartet wurde gefunden, dass die Brandfestigkeit von polyethylenhaltigen Hohlkörpern durch eine spezielle Temperaturbehandlung erheblich verbessert werden kann.

Demgemäß wurde ein Verfahren zur Erhöhung der Brandfestigkeit von polyethylenhaltigen ein- oder mehrschichtigen Hohlkörpern, insbesondere von Kunststoffkraftstoffbehältern, durch Tempern des Hohlkörpers bei 60 - 135°C, gefunden.

Für das erfindungsgemäße Verfahren werden bekannte, ein- oder mehrschichtige Hohlkörper, die mindestens eine polyethylenhaltige Schicht umfassen, eingesetzt. Insbesondere handelt es sich bei den Hohlkörpern um solche, die üblicherweise für die Lagerung und den Transport von flüssigen Gefahrstoffen, insbesondere von brennbaren, flüssigen Gefahrstoffen eingesetzt werden können, wie bspw. Chemikalienflaschen, Transportbehälter (IBC), Fässer, Tanks oder Kanister. Besonders bevorzugt handelt es sich um Kunststoffkraftstoffbehälter.

Die Wandung der Hohlkörper kann aus einer einzigen Schicht oder aus mehreren Schichten bestehen, wobei mindestens eine Schicht zu mindestens 90 Gew. % bezogen auf die Gesamtmasse der Schicht aus Polyethylenhomo- oder copolymeren besteht.

Bevorzugt sollte der Comonomeren-Gehalt der Polyethylencopolymere 1 mol % der Gesamtmenge eingesetzter Monomere nicht überschreiten. Bevorzugte Comonomere sind 1-Olefine, besonders bevorzugte Comonomere sind 1-Buten, 4-Methyl-1-penten, 1-Hexen und 1-Octen. Weiterhin kann es sich bei dem Polyethylen auch um ein Blend aus zwei oder mehreren Polyethylen-Komponenten handeln. Die Polyethylenhomo- oder -copolymere können weiterhin übliche Zusatzstoffen und Hilfsmittel, wie z.B. Stabilisatoren gegen schädliche Verarbeitungseinflüsse, gegen Wärmeoxidation, Alterung, UV-Einfluss sowie Farbstoffe, organische und anorganische Pigmente bzw. Pigmentzubereitungen wie bspw. Rußdispersionen in Polyethylen, Antistatika, Wachse oder spezielle niedermolekulare Gleit- und Schmiermittel enthalten. Die Menge an Zusatzstoffen und Hilfsmitteln sollte aber 10 Gew. % bezogen auf die Gesamtmenge des Materials, bevorzugt 5 Gew.% nicht überschreiten.

Die Dichte des Polyethylenhomo- bzw. -copolymers beträgt 0,94 - 0,97 g/cm³. Bevorzugt beträgt die Dichte 0,94 - 0,955 g/cm³. Die Schmelze-Fließrate MFR 190/21,6 des Polyethylens beträgt 0,5 - 20 g/10 min. Bevorzugt beträgt die Schmelze-Fließrate MFR 190/21,6 2 - 10 g/10 min. Bevorzugt besitzt das Polyethylen ein Gewichtsmittel der molaren Masse von 200 - 800 kg/mol und eine Uneinheitlichkeit M_{w}/Mₙ von 5 - 80.

Weitere Schichten können beispielsweise Permeationssperrschichten oder Haftvermittlerschichten sein. Permeationssperrschichten können beispielsweise aus Ethylen-Vinylalkohol-Copolymeren, Polyamiden oder Polybutylenterephthalat hergestellt werden können. Haftvermittlerschichten können beispielsweise solche Schichten sein, die im wesentlichen aus Copolymeren aus Ethylen und Comonomeren ausgewählt aus der Gruppe der Vinylalkoholester, der (Meth)Acrylsäure und ihrer Ester, und der Nitrile und Amide der (Meth)Acrylsäure bestehen.

Die Hohlkörper können auch mehrere Polyethylenschichten und mehrere zusätzliche Schichten umfassen. Ein vorteilhafter Aufbau eines KKB besteht bspw. aus folgender Schichtfolge: Polyethylenschicht-Haftschicht-Permeationssperrschicht-Haftschicht-Mahlgutschicht-Polyethylenschicht.

Derartige mehrschichtige Hohlkörper sind bekannt und können vorteilhaft durch Coextrusion hergestellt werden (Siehe z.B. W. Daubenbüchel, "Anwendung der Coextrusion beim Extrusionsblasformen", in Kunststoffe 81, 894 (1991) und "Coextrudierte Kunststoffkraftstoffbehälter", ebenda, 82, 201 (1992).

Für das erfindungsgemäße Verfahren eignen sich weiterhin auch Hohlkörper, bei denen das Sperrpolymere nicht als geschlossene Schicht vorliegt, sondern labyrintartige Strukturen bildet, die primär den Diffusionsweg der Permeanden durch die KKB-Wand verlängern sollen. Beispielhaft für solche KKB-Typen seien hier die Selar®-KKB genannt.

Es können auch Hohlkörper eingesetzt werden, deren Oberfläche durch dem Fachmann bekannte Techniken wie beispielsweise Fluorierung, Sulfonierung, Plasmapolymerisation oder Oberflächenlackierung veredelt worden ist. Besonders vorteilhaft können auch die eingangs geschilderten Kohlkörper mit flammenhemmenden Beschichtungen oder flammenhemmenden Einlagen eingesetzt werden. Beim erfindungsgemiäßen Verfahren zur Erhöhung der Brandfestigkeit werden die geschilderten Hohlkörper bei 60 - 135°C, bevorzugt 80 - 120°C getempert. Im Zuge der Temperung nimmt die Brandfestigkeit der Hohlkörper deutlich zu. Die Hohlkörper werden vorteilhaft so lange getempert, bis eine Verlängerung der Temperzeit keine Verbesserung der Brandfestigkeit mehr ergibt. Die Dauer der Temperung ist abhängig von den Temperbedingungen. Im allgemeinen beträgt die Dauer der Temperung 0,25 bis 30 h, bevorzugt 1 - 20 h und insbesondere 2 - 15 h.

Die Erwärmung der Hohlkörper auf die Tempertemperatur kann auf beliebige Art und Weise erfolgen, wichtig ist nur, dass die Erwärmung gleichmässig erfolgt. Die Temperung kann beispielsweise in einem Umluft-Trockenschrank erfolgen. Der Schritt der Temperung kann vorteilhaft in einem Ofen erfolgen, der dem Blasformprozess direkt nachgeschaltet ist, so dass die Energie der heiss entformten Hohlkörper noch für das Tempern mitgenutzt werden kann. Sie kann aber auch in einem separaten Schritt erfolgen. So läßt sich die Temperung bspw. in einem Prozeßschritt mit einer ggf. erforderlichen off-line Fluorierung durchführen. Hierbei wird der Tank in der Fluorierungskammer direkt der Temperung unterzogen. Es ist auch möglich, einen KKB -unkomplettiert, teil- oder vollkomplettiert- erst kurz vor dem Einbau in ein Automobil an Ort und Stelle zu tempern.

Die Brandfestigkeit derart behandelter Hohlkörper, die beispielsweise gemäß DIN 54 837 durch Beflammung in einem Brandschacht bestimmt werden kann, ist überraschenderweise gegenüber der unbehandelter Hohlkörper deutlich erhöht. Ein besonderer Vorteil des erfindungsgemäßen Verfahrens ist es, dass keine speziellen PE-Polymere eingesetzt werden müssen, sondern Hohlkörper aus handelsüblichen hochzähen PE-Polymeren eingesetzt werden können. Die folgenden Versuche sollen die Erfindung beispielhaft erläutern, ohne dass dadurch der Umfang der Erfindung eingeschränkt wird.

Die Messgrößen wurden folgendermaßen bestimmt:

| | |
|---|---|
| Dichte [g/cm³] | nach ISO 1183 |
| Schmelze-Fließrate MFR 190/21,6 [g/10 min] | nach ISO 1133 |

### Vergleichsbeispiele 1 - 2 , Beispiele 4 - 6

Für die Versuche wurden Rundboden-Testflaschen mit 300 ml Inhalt aus Lupolen® 4261 AG (ρ = 0,945 g/cm³; MFR 190/21,6 = 6,0) auf einer Krupp-Kautex-Blasformanlage V8 hergestellt. Die Wanddicke der Flaschen betrug 0,8, 1,5 bzw. 2,0 mm. Von jedem Flaschentyp wurde jeweils ein Teil der Flaschen für die Dauer von 17 h im Trockenschrank getempert. Jeweils 10 bei 110°C über 15 h getemperte Flaschen und 10 entsprechende ungetemperte Flaschen wurden mit jeweils 150 ml Wasser (20°C) gefüllt, dem eine geringe Menge einer Seifenlauge zur Vermeidung größerer, an der Flascheninnenwand anhaftender Wassertropfen zugesetzt war. Die gefüllten Flaschen wurden in einem Brandschacht nach DIN 54 837 beflammt. Die Beflammung erfolgte derart, dass die Flamme in einem Winkel von 45° auf den mit Wasser gefüllten unteren Teil der Flasche traf. Der Ansatzpunkt der Flamme lag 30 mm oberhalb des Flaschenbodens. Als Maß für die Brandfestigkeit dient die Zeit bis zum Auftreten von Löchern, wobei nicht unterschieden wird, ob diese unterhalb oder oberhalb des Füllstandes liegen. Tabelle 1 enthält die ermittelten Messwerte für ungetemperte und getemperte Flaschen als Mittelwert über jeweils 10 Messungen.

**Tabelle 1:**

| Brandfestigkeit von Flaschen aus aus Lupolen® 4261 AG ohne und mit Temperung. | | | | | |
|---|---|---|---|---|---|
| Wanddicke | Vergleichsbeispiel-Nr. | Zeit bis zum Auftreten von Löchernungetempert | Beispiel Nr. | Zeit bis zum Auftreten von Löchern getempert | Zunahme |
| 0,8 mm | 1 | 42 s | 4 | 47 s | +12 % |
| 1,5 mm | 2 | 91 s | 5 | 116 s | +27 % |
| 2,0 mm | 3 | 249 s | 6 | 303 s | +23 % |

## Patentansprüche

1. Verfahren zur Erhöhung der Brandfestigkeit von ein- oder mehrschichtigen Hohlkörpern, die mindestens eine Schicht enthalten, die zu mindestens 90 Gew. % bezogen auf die Gesamtmasse der Schicht aus Ethylenhomo- oder -copolymeren mit einer Dichte von 0,94 - 0,97 g/cm³ und einer Schmelzfließrate MFR 190/21,6 von 0,5 - 20 g/10min besteht,**dadurch gekennzeichnet, dass** man den Hohlkörper einer Temperaturbehandlung bei 60 - 135°C unterwirft.

2. Verfahren gemäß Anspruch 1, **dadurch gekennzeichnet, dass** die Dauer der Temperaturbehandlung 0,25 bis 30 h beträgt.

3. Verfahren gemäß Anspruch 1 oder 2, **dadurch gekennzeichnet, dass** es sich bei dem Hohlkörper um einen Kunststoffkraftstoffbehälter handelt.

## Claims

1. A process for increasing the flame resistance of single- or multilayer hollowware containing at least one layer consisting of at least 90% by weight, based on the total weight of the layer, of ethylene homo- or copolymers having a density of 0.94 - 0.97 g/cm³ and a melt flow rate MFR 190/21.6 of 0.5 - 20 g/10min, which comprises subjecting the hollowware to heat treatment at 60-135°C.

2. A process as claimed in claim 1, wherein the duration of the heat treatment is from 0.25 to 30 h.

3. A process as claimed in claim 1 or 2, wherein the hollowware is a plastic fuel tank.

## Revendications

1. Procédé pour accroître la résistance au feu de corps creux à une ou plusieurs couches dont au moins une couche consiste, pour au moins 90 % de son poids total, en homo- ou co-polymères de l'éthylène à une densité de 0,94 à 0,97 g/cm³ et une fluidité à l'état fondu MFR 190/21,6 de 0,5 à 20 g/10 min, **caractérisé par le fait que** l'on soumet les corps creux à un traitement en température à des niveaux de 60 à 135° C.

2. Procédé selon la revendication 1, **caractérisé par le fait que** la durée du traitement en température est de 0,25 à 30 h.

3. Procédé selon la revendication 1 ou 2, **caractérisé par le fait que** le corps creux consiste en un récipient de carburant en matière plastique.
